Europäisches Patentamt

European Patent Office

Office européen des brevets

(19)

(11) Veröffentlichungsnummer: **0 503 477 B1**

(12) **EUROPÄISCHE PATENTSCHRIFT**

(45) Veröffentlichungstag der Patentschrift: **14.06.95**

(51) Int. Cl.6: **B60Q 11/00**

(21) Anmeldenummer: **92103758.6**

(22) Anmeldetag: **05.03.92**

(54) **Schaltung zur Überwachung von Verbrauchern.**

(30) Priorität: **08.03.91 DE 4107415**

(43) Veröffentlichungstag der Anmeldung:
**16.09.92 Patentblatt 92/38**

(45) Bekanntmachung des Hinweises auf die
Patenterteilung:
**14.06.95 Patentblatt 95/24**

(84) Benannte Vertragsstaaten:
**DE ES FR GB IT**

(56) Entgegenhaltungen:
**EP-A- 0 011 454**
**FR-A- 2 458 199**
**FR-A- 2 460 087**

(73) Patentinhaber: **TEMIC TELEFUNKEN microe-**
**lectronic GmbH**
**Theresienstrasse 2**
**D-74072 Heilbronn (DE)**

(72) Erfinder: **Koch, Anton, Dipl.-Ing. (FH)**
**Rosenstrasse 10**
**W-6957 Elztal-Auerbach (DE)**

(74) Vertreter: **Maute, Hans-Jürgen, Dipl.-Ing.**
**TEMIC TELEFUNKEN microelectronic GmbH**
**Postfach 35 35**
**D-74025 Heilbronn (DE)**

**Beschreibung**

Die Erfindung betrifft eine Schaltung zur Überwachung von Verbrauchern gemäß dem Oberbegriff des Patentanspruchs 1. Eine derartige Schaltung ist aus der EP-A 0 011 454 bekannt.

Zur Überwachung von Verbrauchern - beispielsweise im Kfz-Bereich die Überwachung von Lampenkreisen mit Abblendlicht, Bremslicht oder Nebelschlußleuchte - werden Schaltungen eingesetzt, die den Stromfluß durch den Verbraucher, beispielsweise die Autoglühlampen, detektieren und ggf. einen Defekt anzeigen.
Realisiert wird dies dadurch, daß in den Stromkreis des Verbrauchers ein niederohmiger Widerstand (Shunt) eingefügt wird; die an diesem Widerstand abfallende Spannung wird ausgewertet und dient als Kriterium für die Funktionsfähigkeit des Verbrauchers.

Der Erfindung liegt die Aufgabe zugrunde, eine Schaltung gemäß dem Oberbegriff des Patentanspruchs 1 anzugeben, die mit einfachen Mitteln sicher funktioniert. Diese Aufgabe wird erfindungsgemäß durch die Merkmale im Kennzeichen des Patentanspruchs 1 gelöst. Vorteilhafte Weiterbildungen der Erfindung ergeben sich aus den Unteransprüchen.

Bei der gattungsbildenden Druckschrift EP-A-0 011 454 werden im Referenzstromteil zwei unterschiedliche temperatur- und spannungsunabhängige Referenzströme gebildet, dem Komparatorteil zugeführt und direkt miteinander verglichen.
Die erfindungsgemäße Schaltung vereinigt demgegenüber mehrere Vorteile in sich:

- Die Komparatorstufe, die - im Prinzip - die am Shunt abfallende Spannung mit einer Referenzspannung vergleicht, besteht lediglich aus einem Komparatorteil und einem Referenzstromteil; des weiteren kann noch ein Kontrollteil zur Abschaltung der Verbraucher-Überwachung vorgesehen werden.
- Die Komparatorstufen können Spannungen an ihren Eingängen auswerten, die höher als die Versorgungsspannung der Komparatoren sind.
- Der Komparatorteil der Komparatorstufe wird lediglich durch einen Referenzstrom versorgt.
- Dieser Referenzstrom ist temperaturabhängig, es wird daher keine aufwendige Temperaturstabilisierung für die Schaltung benötigt.
- Der Schwellwert der Komparatorstufe und damit die Ansprechschwelle bei der Überwachung des Verbrauchers kann über den Referenzstrom oder durch Dimensionierung von Widerständen beliebig vorgegeben werden.
- Die gesamte Komparatorstufe kann in einem integrierten Schaltkreis integriert werden; verschiedene Komparatorstufen können vom gleichen Referenzstromteil versorgt werden.

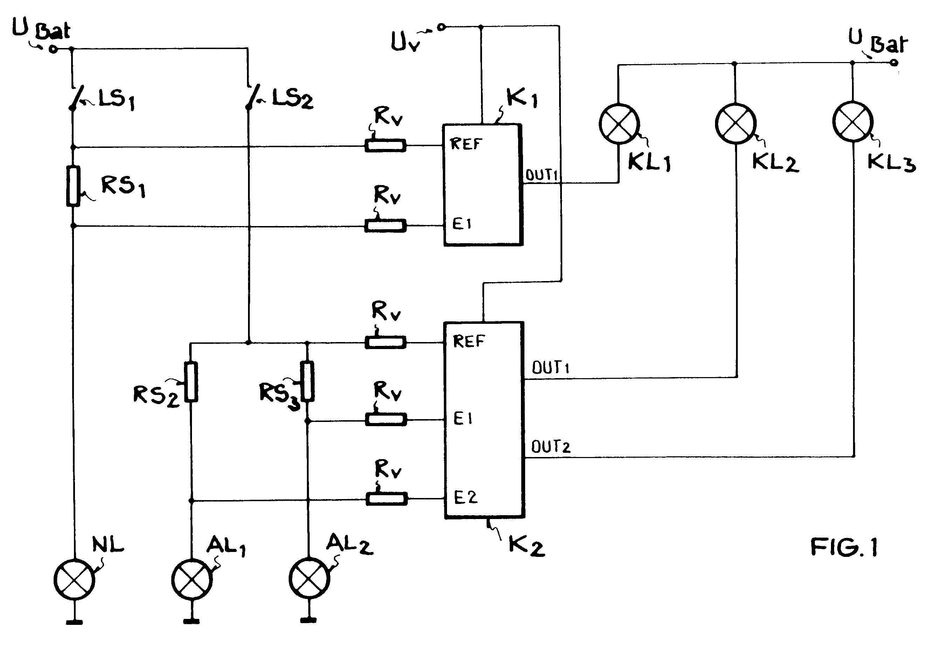

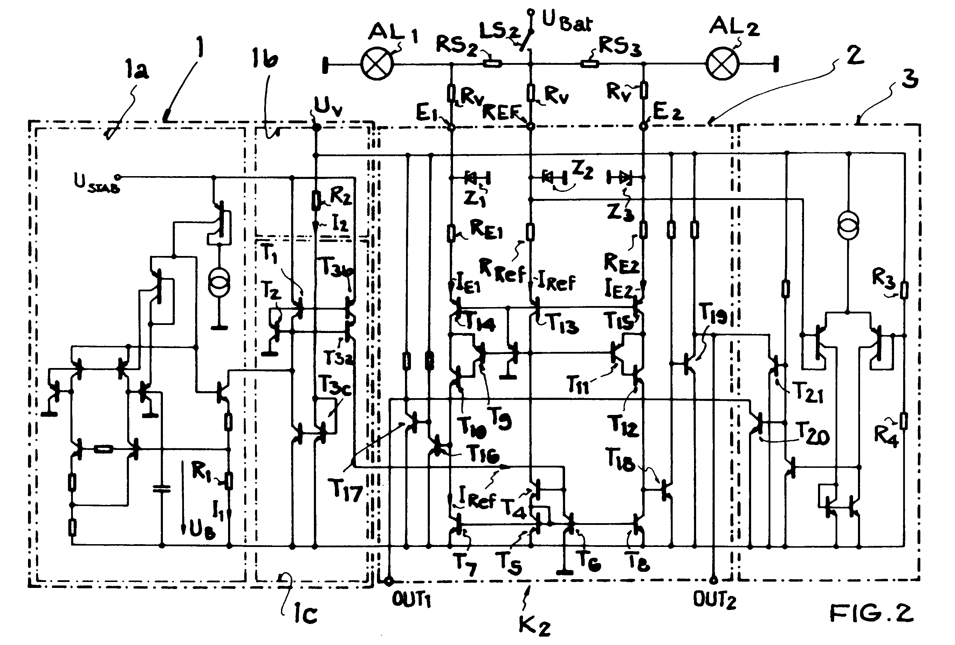

Die erfindungsgemäße Schaltung soll weiterhin anhand der Figuren 1 und 2 - einer Schaltung zur Überwachung der Lampenkreise in Kraftfahrzeugen - näher beschrieben werden; in der Figur 1 ist dabei das Prinzipschaltbild und in der Figur 2 ein Ausführungsbeispiel einer derartigen Schaltung dargestellt.

Die Figur 1 zeigt den prinzipiellen Aufbau eines Glühlampenkreises in Kraftfahrzeugen am Beispiel des Nebelschlußlichts NL und zweier Abblendlichter $AL_1$ bzw. $AL_2$. Die Glühlampen werden von der Batterie, deren Spannung $U_{Bat}$ typischerweise zwischen 10 V und 15 V schwanken kann, über Lampenschalter $LS_1$ und $LS_2$ versorgt; zwischen den Lampenschaltern $LS_1$ und $LS_2$ und den Glühlampen NL bzw. $AL_1$, $AL_2$ sind niederohmige Shunt-Widerstände $RS_1$ bzw. $RS_2$, $RS_3$ angeordnet. Die an den Shunt-Widerständen abfallende Spannung wird von den beiden Komparatorstufen $K_1$ bzw. $K_2$ ausgewertet:

- dem Eingang $E_1$ der Einzel-Komparatorstufe $K_1$ wird als Eingangssignal die Spannung nach dem Widerstand $RS_1$, dem Eingang REF als Eingangssignal die Spannung vor dem Widerstand $RS_1$ jeweils über einen Vorwiderstand $R_V$ zugeführt; d. h. die Einzel-Komparatorstufe $K_1$ vergleicht - im Prinzip - die am Widerstand $RS_1$ abfallende Spannung mit einer internen Referenzspannung
- entsprechend wird den beiden Eingängen $E_1$ und $E_2$ der Doppel-Komparatorstufe $K_2$ als Eingangssignal die Spannung nach den Widerständen $RS_2$, $RS_3$, dem Eingang REF als Eingangssignal die Spannung vor den Widerständen $RS_2$, $RS_3$ jeweils über einen Vorwiderstand $R_V$ zugeführt; d. h. die Doppel-Komparatorstufe $K_2$ vergleicht - im Prinzip - die an den beiden Widerständen $RS_2$, $RS_3$ abfallende Spannung mit einer internen Referenzspannung.

An den Ausgängen $OUT_1$, $OUT_2$ der beiden Komparatorstufen $K_1$ und $K_2$ können Kontrollampen $KL_1$, $KL_2$ und $KL_3$ angeschlossen werden, die zur Feststellung des Status der Glühlampen NL, $AL_1$, $AL_2$ dienen. Falls eine (oder mehrere) der überwachenden Lampen NL, $AL_1$, $AL_2$ defekt ist (sind), fällt am (an den) betreffenden Shunt-Widerstand (Shunt-Widerständen) $RS_1$, $RS_2$, $RS_3$ keine Spannung ab, so daß die Eingangsspannungen an den Eingängen der Komparatorstufe gleich groß sind. Diese Information wird von der Komparatorstufe verarbeitet, an den Ausgängen $OUT_1$, $OUT_2$ ein charakteristisches Ausgangssignal ausgegeben und die betreffende(n) Kontrollampe(n) $KL_1$, $KL_2$, $KL_3$ angesteuert.
Unterschreitet die Spannung $U_{Ref}$ am Referenzeingang REF der Komparatorstufen $K_1$, $K_2$ einen be-

stimmten Grenzwert, beispielsweise 3 V - dies dient als Kriterium für einen geöffneten Lampenschalter $LS_1$, $LS_2$ - werden die Komparatorstufen $K_1$, $K_2$ abgeschaltet; es findet dann keine Überwachung der Glühlampen mehr statt.

Der Spannungsabfall an den Shunt-Widerständen $RS_1$, $RS_2$, $RS_3$ liegt typischerweise in der Größenordnung 10 mV; an diesem Wert orientiert sich die Ansprechschwelle der Komparatorstufen. Die Ansprechschwelle ist abhängig von der Versorgungsspannung $U_V$ oder der Batteriespannung $U_{Bat}$ (falls $U_{Bat} = U_V$); bei größerer Lampenspannung bzw. Batteriespannung $U_{Bat}$ steigt der Spannungsabfall an den Shunt-Widerständen $RS_1$, $RS_2$, $RS_3$, folglich steigt auch die Ansprechschwelle mit einem positiven Spannungsgang.

In der Figur 2 ist ein Ausführungsbeispiel für das Prinzipschaltbild der Figur 1 dargestellt - eine Doppel-Komparatorstufe $K_2$ für die Abblendlampen $AL_1$, $AL_2$ eines Kraftfahrzeugs. Die Lampen werden über den Lampenschalter $LS_2$ an die Batteriespannung $U_{Bat}$ angeschlossen; die vor bzw. nach den Shunt-Widerständen $RS_2$, $RS_3$ anliegende Spannung wird als Eingangssignal über die Vorwiderstände $R_V$ den beiden Eingängen $E_1$ und $E_2$ bzw. dem Referenzeingang REF der Komparatorstufe $K_2$ zugeführt. Die beiden Schaltungsausgänge der Doppel-Komparatorstufe $K_2$ sind - wie in Figur 1 - mit $OUT_1$ und $OUT_2$ bezeichnet.

Der Referenzstrom $I_{Ref}$ zur Einstellung der Ansprechschwelle der Komparatorstufe wird mittels des Referenzstromteils 1 erzeugt; der Referenzstrom $I_{Ref}$ setzt sich aus den beiden Anteilen $I_1$ und $I_2$ zusammen: $I_{Ref} = I_1 + I_2$.

- Der Strom $I_1$ wird von der konventionellen Bandgap-Schaltung 1a, die von einer stabilisierten Spannung $U_{STAB}$ versorgt wird, aus der temperaturunabhängigen Bandgap-Spannung $U_B$ und dem Widerstand $R_1$ gebildet: $I_1 = U_B/R_1$. Da der Widerstand $R_1$ temperaturabhängig ist, hängt auch $I_1$ von der Temperatur ab; da die Spannung $U_B$ unabhängig von der Versorgungsspannung $U_V$ der Schaltung ist, hängt auch $I_1$ nicht von $U_V$ ab.
- Der Strom $I_2$ wird im Schaltungsteil 1b durch den an die Versorgungsspannung $U_V$ angeschlossenen Widerstand $R_2$ gebildet: $I_2 = (U_V - U_{BE})/R_2$; $U_{BE}$ ist die Flußspannung des Transistors $T_{3c}$. Wegen des Widerstands $R_2$ wird $I_2$ sowohl temperaturabhängig als auch abhängig von der Versorgungsspannung $U_V$.
- Die beiden Ströme $I_1$ und $I_2$ werden im Schaltungsteil 1c über den Stromspiegel aus den Transistoren $T_1$, $T_2$, $T_{3a}$ und $T_{3b}$ addiert und ergeben den temperaturabhängigen raturabhängigen Referenzstrom $I_{Ref}$, mit dem die Ansprechschwelle des Komparatorteils 2 eingestellt wird:

$$I_{Ref} = U_B/R_1 + (U_V - U_{BE})/R_2 \qquad (1).$$

Der Referenzstrom $I_{Ref}$ wird dem Komparatorteil 2 über einen Stromspiegel zugeführt, wobei der Referenzstrom $I_{Ref}$ durch die Transistoren $T_4$, $T_5$ und $T_6$ in den Referenzzweig des Komparatorteils 2 zum Transistor $T_{13}$ bzw. zu den Transistoren $T_{14}$, $T_{15}$, durch den Transistor $T_7$ in den ersten Eingangszweig und durch den Transistor $T_8$ in den zweiten Eingangszweig des Komparatorteils 2 gespiegelt wird. Die Transistoren $T_9$, $T_{10}$ bzw. $T_{11}$, $T_{12}$ dienen zur Kompensation der Early-Spannung, damit die durch den Referenzstrom $I_{Ref}$ eingestellte Ansprechschwelle unabhängig von den an den Eingängen $E_1$, $E_2$, REF der Komparatorstufe $K_2$ anliegenden Spannungen ist. Der an den Eingangswiderständen $R_{E1}$ bzw. $R_{E2}$ durch die Eingangsströme $I_{E1}$ bzw. $I_{E2}$ verursachte Spannungsabfall wird mit dem durch den Referenzstrom $I_{Ref}$ am Referenzwiderstand $R_{Ref}$ - dies ist der Emitterwiderstand des Transistors $T_{13}$ - verursachten Spannungsabfall verglichen. Die Spannungsdifferenz $\Delta U$ zwischen den beiden Eingängen $E_1$ bzw. $E_2$ und dem Referenzeingang REF ergibt sich somit zu:

$$\Delta U = (R_{Ref} - R_{E1}) \cdot I_{Ref} \text{ bzw. } \Delta U = (R_{Ref} - R_{E2}) \cdot I_{Ref} \qquad (2)$$

In Verbindung mit Gleichung (1) ergibt sich folgende Relation:

$$\Delta U = (R_{Ref} - R_{E1})/R_1 \cdot U_B + (R_{Ref} - R_{E1})/R_2 \cdot (U_V - U_{BE}) \qquad (3)$$

Die Spannungsdifferenz $\Delta U$ setzt sich nach Gleichung (3) aus einem temperatur- und versorgungsspannungsunabhängigen Anteil, der den Absolutteil der Ansprechschwelle bildet, und einem versorgungsspannungsabhängigen Anteil, der den gewünschten Spannungsgang liefert, zusammen.

Die Ansprechschwelle der Komparatorstufe $K_2$ bzw. des Komparatorteils 2 kann nach Gleichung (2) über die Differenz der Widerstände $R_{E1}$ ($R_{E2}$) zum Referenzwiderstand $R_{Ref}$ oder über den Referenzstrom $I_{Ref}$ eingestellt und variiert werden; da die Widerstände $R_1$, $R_2$ und $R_{E1}$, $R_{Ref}$ ($R_{E2}$) den gleichen Temperaturkoeffizienten aufweisen, ist die Ansprechschwelle der Komparatorstufe unabhängig von der Temperatur.

Mit den Vorwiderständen $R_V$ und den Zenerdioden $Z_1$, $Z_2$, $Z_3$ werden die Eingänge der Komparatorstufe $K_2$ gegen Überspannungen und gleichzeitig gegen elektrostatische Entladungen geschützt. Die Vorwiderstände $R_V$ müssen gleich groß sein, damit sie keinen Einfluß auf die Ansprechschwelle der Komparatorstufe $K_2$ haben.

Unterschiedliche Betriebszustände der Glühlampen werden von der Schaltung erkannt und ausgewertet:

- Bei einer defekten Lampe $AL_1$ ($AL_2$) liegt an den Eingängen $E_1$ ($E_2$) und REF des Kompa-ratorteils 2 die gleiche Spannung an; da der Widerstand $R_{E1}$ ($R_{E2}$) kleiner als der Referenzwiderstand $R_{Ref}$ ist - beispielsweise $R_{E1}$ - ($R_{E2}$) = 400 Ω und $R_{Ref}$ = 800 Ω - ist der Strom $I_{E1}$ ($I_{E2}$) größer als der Referenzstrom $I_{Ref}$. Der an der Basis des Transistors $T_{16}$ - ($T_{18}$) zufließende Strom $I_{E1}$ ($I_{E2}$) ist demnach größer als der abfließende Strom $I_{Ref}$, daher wird der Transistor $T_{16}$ ($T_{18}$) durchgeschaltet, und der Transistor $T_{17}$ ($T_{19}$) sperrt. Am Aus-gang $OUT_1$ ($OUT_2$) des Komparatorteils 2 liegt demnach High-Potential an, was ein Zeichen für eine defekte Lampe ist.

- Ist die Lampe $AL_1$ ($AL_2$) in Ordnung, ist die Spannung am Eingang $E_1$ ($E_2$) des Kompa-torteils 2 nach Gleichung (2) um die Spannungsdifferenz U geringer als die Spannung am Eingang REF. Der Strom $I_{Ref}$ ist in diesem Fall größer als der Strom $I_{E1}$ ($I_{E2}$), daher fließt an der Basis des Transistors $T_{16}$ ($T_{18}$) mehr Strom ab als zugeführt wird; der Transi-stor $T_{16}$ ($T_{18}$) sperrt und der Transistor $T_{17}$ - ($T_{19}$) schaltet durch. Am Ausgang $OUT_1$ - ($OUT_2$) des Komparatorteils 2 liegt demnach Low-Potential an, was als Kriterium für eine funktionstüchtige Lampe dient.

Die Spannungsdifferenz ΔU beträgt beispielsweise 10 mV, wobei dieser Zahlenwert nach Gleichung (2) über die Differenz der Wider-stände $R_{Ref}$ - $R_{E1}$ ($R_{E2}$) oder über den Refe-renzstrom $I_{Ref}$ eingestellt werden kann. Die Ansprechschwelle des Komparators steigt nach Gleichung (3) in Abhängigkeit von der Versorgungsspannung $U_V$ an - beispielsweise um 0,47 mV pro Volt.

- Die Schalterstellung der Lampenschalter $LS_1$, $LS_2$ bzw. ein sicheres Abschalten wird vom Kontrollteil 3 überwacht bzw. durch diesen gewährleistet; wenn die Spannung $U_{Ref}$ am Komparatoreingang REF einen bestimmten Wert $U_{Refmin}$, beispielsweise 2 V, unterschrei-tet, werden die Schaltungsausgänge $OUT_1$ bzw. $OUT_2$ abgeschaltet - es findet kei-ne Überwachung mehr statt. Die Spannung $U_{Refmin}$ wird vom Kontrollteil 3 durch einen Spannungsteiler aus den Widerständen $R_3$ und $R_4$ eingestellt; ist die Referenzspannung $U_{Ref}$ kleiner als die minimale Spannung $U_{Refmin}$, schalten die Transistoren $T_{20}$ bzw. $T_{21}$ durch und somit der Transistor $T_{20}$ den Ausgang $OUT_1$ und der Transistor $T_{21}$ den Ausgang $OUT_2$ auf Low-Potential.

Die gesamte Komparatorstufe kann in einem integrierten Schaltkreis integriert werden, wobei ein Referenzstromteil und mehrere Komparatorteile zur Überwachung mehrerer Verbraucher bzw. Glühlampen vorgesehen werden können. Als Anschlußpins können die Eingänge des Komparatorteils und der Anschluß für die Versorgungsspannung $U_V$ vorgesehen werden, während die Ausgänge des Kompa-ratorteils auf Ausgangtreiber geschaltet werden, die als weitere Anschlußpins fungieren. Abhängig von der Spannung an den Ausgangspins kann erkannt werden, welche(r) der Verbraucher bzw. welche Lampe(n) defekt ist (sind).

Als exemplarische Anwendungsbeispiele der Schaltung sollen die Stromüberwachung von Verbrauchern, das Ein-/Ausschalten von Verbrauchern bei Überstrom, das Abschalten von Gleichstrommotoren bei Überlast, das Überprüfen auf Kurzschlußfestigkeit bzw. der Einsatz als Kurzschlußabschalter und die Glühkerzenüberwachung bei Dieselmotoren genannt werden.

## Patentansprüche

1. Schaltung zur Überwachung von Verbrauchern, mit im Stromkreis des Verbrauchers angeord-neten Meßwiderständen ($RS_1$, $RS_2$, $RS_3$), de-ren Spannungsabfall ausgewertet wird, und mit mindestens einer aus einem Referenzstromteil (1) und einem Komparatorteil (2) aufgebauten Komparatorstufe ($K_1$, $K_2$), gekennzeichnet da-durch:

    a) im Referenzstromteil (1) wird ein einziger Referenzstrom ($I_{Ref}$) gebildet und dem Komparatorteil (2) zugeführt,

    b) der Referenzstrom ($I_{Ref}$) ist temperaturabhängig ausgebildet und besteht aus einem spannungsunabhängigen Anteil ($I_1$) und ei-nem spannungsabhängigen Anteil ($I_2$),

    c) der Komparatorteil (2) ist aus einem oder mehreren Eingangszweigen und einem Re-ferenzzweig aufgebaut, wobei im Referenz-zweig der Referenzstrom ($I_{Ref}$) fließt und in den Eingangszweigen Eingangsströme ($I_{E1}$, $I_{E2}$) fließen, die ein Maß für die an den Meßwiderständen ($RS_1$, $RS_2$, $RS_3$) abfallen-den und an den Eingängen ($E_1$, $E_2$) der Komparatorstufen ($K_1$, $K_2$) anliegenden Spannungen sind,

    d) der Referenzzweig weist einen Referenzwiderstand ($R_{Ref}$) und jeder Eingangszweig einen Eingangswiderstand ($R_{E1}$, $R_{E2}$) auf,

    e) der Komparatorteil (2) vergleicht den durch den Referenzstrom ($I_{Ref}$) am Referen-zwiderstand ($R_{Ref}$) verursachten Spannungs-abfall mit dem durch die Eingangsströme ($I_{E1}$, $I_{E2}$) an den Eingangswiderständen ($R_{E1}$, $R_{E2}$) verursachten Spannungsabfall,

f) in Abhängigkeit des Spannungsvergleichs wird ein bestimmter Spannungspegel an den Ausgängen ($OUT_1$, $OUT_2$) der Komparatorstufen ($K_1$, $K_2$) ausgegeben.

2. Schaltung nach Anspruch 1, dadurch gekennzeichnet, daß im Referenzstromteil (1) eine Bandgap-Schaltung (1a) vorgesehen ist, die den spannungsunabhängigen Teil ($I_1$) des Referenzstroms ($I_{Ref}$) mittels eines Widerstands ($R_1$) erzeugt.

3. Schaltung nach Anspruch 1, dadurch gekennzeichnet, daß der Referenzstromteil (1) einen zweiten Schaltungsteil (1b) aufweist, der einen an die Versorgungsspannung ($U_V$) angeschlossenen Widerstand ($R_2$) enthält, und daß der spannungsabhängige Teil ($I_2$) des Referenzstroms ($I_{Ref}$) mittels dieses Widerstands ($R_2$) gebildet wird.

4. Schaltung nach einem der Ansprüche 1 bis 3, dadurch gekennzeichnet, daß in einem weiteren Schaltungsteil (1c) des Referenzstromteils (1) Stromspiegel-Transistoren ($T_1$, $T_2$, $T_{3a}$, $T_{3b}$) vorgesehen sind, über die die beiden Teilströme ($I_1$, $I_2$) des Referenzstroms ($I_{Ref}$) addiert werden.

5. Schaltung nach einem der Ansprüche 1 bis 4, dadurch gekennzeichnet, daß der Komparatorteil (2) Stromspiegel-Transistoren ($T_4$, $T_5$, $T_6$, $T_7$, $T_8$) aufweist, über die der Referenzstrom ($I_{Ref}$) den Zweigen des Komparatorteils (2) zugeführt wird.

6. Schaltung nach einem der Ansprüche 1 bis 5, dadurch gekennzeichnet, daß der Komparatorteil (2) Vergleichs-Transistoren ($T_{16}$, $T_{18}$) enthält, daß zum Spannungsvergleich die den Spannungen entsprechenden Ströme ($I_{E1}$, $I_{E2}$, $I_{Ref}$) über die Vergleichs-Transistoren ($T_{16}$, $T_{18}$) miteinander verglichen werden, daß der Komparatorteil (2) Ausgangs-Transistoren ($T_{17}$, $T_{19}$) aufweist, die von den Vergleichs-Transistoren ($T_{16}$, $T_{18}$) abhängig vom Spannungsvergleich angesteuert werden, und daß die Spannungspegel der Ausgänge ($OUT_1$, $OUT_2$) des Komparatorteils (2) der Komparatorstufen ($K_1$, $K_2$) durch die Ausgangs-Transistoren ($T_{17}$, $T_{19}$) eingestellt werden.

7. Schaltung nach einem der Ansprüche 1 bis 6, dadurch gekennzeichnet, daß der Referenzwiderstand ($R_{Ref}$) größer als die Eingangswiderstände ($R_{E1}$, $R_{E2}$) ist.

8. Schaltung nach einem der Ansprüche 1 bis 7, dadurch gekennzeichnet, daß die Ansprechschwelle der Komparatorstufen ($K_1$, $K_2$) durch die Größe des Referenzstroms ($I_{Ref}$) und/oder über die Differenz zwischen dem Referenzwiderstand ($R_{Ref}$) und den Eingangswiderständen ($R_{E1}$, $R_{E2}$) eingestellt bzw. variiert wird.

9. Schaltung nach Anspruch 8, dadurch gekennzeichnet, daß die Ansprechschwelle der Komparatorstufen ($K_1$, $K_2$) einen positiven Spannungsgang aufweist.

10. Schaltung nach einem der Ansprüche 1 bis 9, dadurch gekennzeichnet, daß die Widerstände ($R_1$, $R_2$) zur Erzeugung der beiden Anteile ($I_1$, $I_2$) des Referenzstroms ($I_{Ref}$) und die Widerstände ($R_{E1}$, $R_{E2}$, $R_{Ref}$) zur Bildung des Spannungsvergleichs den gleichen Temperaturgang aufweisen.

11. Schaltung nach einem der Ansprüche 1 bis 10, dadurch gekennzeichnet, daß die Komparatorstufe ($K_1$, $K_2$) einen Kontrollteil (3) aufweist, der die Überwachung des Verbrauchers beendet, wenn die Spannung ($U_{Ref}$) am Referenzeingang (REF) der Komparatorstufe ($K_1$, $K_2$) eine Minimalspannung ($U_{Refmin}$) unterschreitet.

12. Schaltung nach Anspruch 11, dadurch gekennzeichnet, daß der Kontrollteil (3) einen Spannungsteiler ($R_3$, $R_4$) und Schalt-Transistoren ($T_{20}$, $T_{21}$) aufweist, daß die Minimalspannung ($U_{Refmin}$) über den Spannungsteiler ($R_3$, $R_4$) eingestellt wird, und daß beim Unterschreiten der Minimalspannung ($U_{Refmin}$) die Ausgänge ($OUT_1$, $OUT_2$) des Komparatorteils (2) über die Schalt-Transistoren ($T_{20}$, $T_{21}$) abgeschaltet werden.

13. Schaltung nach einem der Ansprüche 1 bis 12, dadurch gekennzeichnet, daß zum Schutz vor Überspannungen Vorwiderstände ($R_V$) und Zenerdioden ($Z_1$, $Z_2$, $Z_3$) an den Eingängen ($E_1$, $E_2$, REF) der Komparatorstufen ($K_1$, $K_2$) angeschlossen sind.

14. Schaltung nach einem der Ansprüche 1 bis 13, dadurch gekennzeichnet, daß Kontrollampen ($KL_1$, $KL_2$, $KL_3$) vorgesehen sind, die in Abhängigkeit der Spannungspegel an den Ausgängen ($OUT_1$, $OUT_2$) der Komparatorstufen ($K_1$, $K_2$) angesteuert werden.

15. Schaltung nach einem der Ansprüche 1 bis 14, dadurch gekennzeichnet, daß die Komparatorstufen ($K_1$, $K_2$) in einer integrierten Schaltung integriert sind.

**16.** Schaltung nach einem der Ansprüche 1 bis 15, dadurch gekennzeichnet, daß mehreren Komparatorteilen (2) verschiedener Komparatorstufen ($K_1$, $K_2$) von einem Referenzstromteil (1) der gleiche Referenzstrom ($I_{Ref}$) zugeführt wird.

## Claims

**1.** A circuit for monitoring consumers, with measuring resistors ($RS_1$, $RS_2$, $RS_3$) which are arranged in the circuit of the consumer and the voltage drop across which is analyzed, and with at least one comparator stage ($K_1$, $K_2$) constructed from a reference current section (1) and a comparator section (2), characterised in that:

a) in the reference current section (1) a single reference current ($I_{Ref}$) is formed and fed to the comparator section (2),

b) the reference current ($I_{Ref}$) is designed to be temperature-dependent and consists of a voltage-independent component ($I_1$) and a voltage-dependent component ($I_2$),

c) the comparator section (2) is constructed from one or several input branches and a reference branch, where the reference current ($I_{Ref}$) flows in the reference branch and input currents ($I_{E1}$, $I_{E2}$), which are a gauge of the voltages dropping across the measuring resistors ($RS_1$, $RS_2$, $RS_3$) and applied to the inputs ($E_1$, $E_2$) of the comparator stages ($K_1$, $K_2$), flow in the input branches,

d) the reference branch comprises a reference resistor ($R_{Ref}$) and each input branch comprises an input resistor ($R_{E1}$, $R_{E2}$),

e) the comparator section (2) compares the voltage drop produced across the reference resistor ($R_{Ref}$) by the reference current ($I_{Ref}$) with the voltage drop produced across the input resistors ($R_{E1}$, $R_{E2}$) by the input currents ($I_{E1}$, $I_{E2}$),

f) in dependence upon the voltage comparison, a specified voltage level is output at the outputs ($OUT_1$, $OUT_2$) of the comparator stages ($K_1$, $K_2$).

**2.** A circuit as claimed in Claim 1, characterised in that in the reference current section (1) a bandgap circuit (1a) is provided which generates the voltage-independent component ($I_1$) of the reference current ($I_{Ref}$) by means of a resistor ($R_1$).

**3.** A circuit as claimed in Claim 1, characterised in that the reference current section (1) comprises a second circuit part (1b) which contains a resistor ($R_2$) connected to the supply voltage ($U_V$) and that the voltage-dependent component ($I_2$) of the reference current ($I_{Ref}$) is formed by means of this resistor ($R_2$).

**4.** A circuit as claimed in one of Claims 1 to 3, characterised in that in a further circuit part (1c) of the reference current section (1) current mirror transistors ($T_1$, $T_2$, $T_{3a}$, $T_{3b}$) are provided via which the two partial currents ($I_1$, $I_2$) of the reference current ($I_{Ref}$) are added.

**5.** A circuit as claimed in one of Claims 1 to 4, characterised in that the comparator section (2) comprises current mirror transistors ($T_4$, $T_5$, $T_6$, $T_7$, $T_8$) via which the reference current ($I_{Ref}$) is fed to the branches of the comparator section (2).

**6.** A circuit as claimed in one of Claims 1 to 5, characterised in that the comparator section (2) contains comparator transistors ($T_{16}$, $T_{18}$), that for the voltage comparison the currents ($I_{E1}$, $I_{E2}$, $I_{Ref}$) corresponding to the voltages are compared with one another via the comparator transistors ($T_{16}$, $T_{18}$), that the comparator section (2) comprises output transistors ($T_{17}$, $T_{19}$) which are driven by the comparator transistors ($T_{16}$, $T_{18}$) in dependence upon the voltage comparison, and that the voltage levels of the outputs ($OUT_1$, $OUT_2$) of the comparator section (2) of the comparator stages ($K_1$, $K_2$) are set by the output transistors ($T_{17}$, $T_{19}$).

**7.** A circuit as claimed in one of Claims 1 to 6, characterised in that the reference resistance ($R_{Ref}$) is greater than the input resistances ($R_{E1}$, $R_{E2}$).

**8.** A circuit as claimed in one of Claims 1 to 7, characterised in that the response threshold of the comparator stages ($K_1$, $K_2$) is set and varied by the magnitude of the reference current ($I_{Ref}$) and/or via the difference between the reference resistor ($R_{Ref}$) and the input resistors ($R_{E1}$, $R_{E2}$).

**9.** A circuit as claimed in Claim 8, characterised in that the response threshold of the comparator stages ($K_1$, $K_2$) possesses a positive voltage response.

**10.** A circuit as claimed in one of Claims 1 to 9, characterised in that the resistors ($R_1$, $R_2$) for the generation of the two components ($I_1$, $I_2$) of the reference current ($I_{Ref}$) and the resistors ($R_{E1}$, $R_{E2}$, $R_{Ref}$) for the formation of the voltage comparison possess the same temperature response.

11. A circuit as claimed in one of Claims 1 to 10, characterised in that the comparator stage ($K_1$, $K_2$) comprises a control section (3) which terminates the monitoring of the consumer when the voltage ($U_{Ref}$) at the reference input (REF) of the comparator stage ($K_1$, $K_2$) falls below a minimum voltage ($U_{Refmin}$).

12. A circuit as claimed in Claim 11, characterised in that the control section (3) comprises a voltage divider ($R_3$, $R_4$) and switching transistors ($T_{20}$, $T_{21}$), that the minimum voltage ($U_{Refmin}$) is set via the voltage divider ($R_3$, $R_4$), and that when the minimum voltage ($U_{Refmin}$) is undershot the outputs ($OUT_1$, $OUT_2$) of the comparator section (2) are disconnected via the switching transistors ($T_{20}$, $T_{21}$).

13. A circuit as claimed in one of Claims 1 to 12, characterised in that for protection from excess voltages, series resistors ($R_V$) and Zener diodes ($Z_1$, $Z_2$, $Z_3$) are connected to the inputs ($E_1$, $E_2$, REF) of the comparator stages ($K_1$, $K_2$).

14. A circuit as claimed in one of Claims 1 to 13, characterised in that pilot lamps ($KL_1$, $KL_2$, $KL_3$) are provided which are driven in dependence upon the voltage levels at the outputs ($OUT_1$, $OUT_2$) of the comparator stages ($K_1$, $K_2$).

15. A circuit as claimed in one of Claims 1 to 14, characterised in that the comparator stages ($K_1$, $K_2$) are integrated in an integrated circuit.

16. A circuit as claimed in one of Claims 1 to 15, characterised in that the same reference current ($I_{Ref}$) is fed to a plurality of comparator sections (2) of different comparator stages ($K_1$, $K_2$) from a reference current section (1).

**Revendications**

1. Circuit pour la surveillance de consommateurs, avec des résistances de mesure ($RS_1$, $RS_2$, $RS_3$) agencées dans le circuit de courant du consommateur, dont la chute de tension est évaluée, et avec au moins un étage de comparateur ($K_1$, $K_2$) constitué d'une partie de courant de référence (1) et d'une partie de comparateur (2), caractérisé en ce que :

    a) dans la partie de courant de référence (1), un courant de référence ($I_{Ref}$) unique est formé et est amené à la partie de comparateur (2),

    b) le courant de référence ($I_{Ref}$) est constitué dépendant de la température et consiste en une portion ($I_1$) indépendante de la tension et une portion ($I_2$) dépendante de la tension,

    c) la partie de comparateur (2) est constituée à partir d'une ou de plusieurs branches d'entrée et d'une branche de référence, le courant de référence ($I_{Ref}$) s'écoulant dans la branche de référence et des courants d'entrée ($I_{E1}$, $I_{E2}$) s'écoulant dans les branches d'entrée, qui sont une mesure pour les tensions chutant aux résistances de mesure ($RS_1$, $RS_2$, $RS_3$) et s'appliquant aux entrées ($E_1$, $E_2$) des étages de comparateur ($K_1$, $K_2$),

    d) la branche de référence présente une résistance de référence ($R_{Ref}$) et chaque branche d'entrée présente une résistance d'entrée ($R_{E1}$, $R_{E2}$),

    e) la partie de comparateur (2) compare la chute de tension, causée par le courant de référence ($I_{Ref}$) à la résistance de référence ($R_{Ref}$), avec la chute de tension, causée par les courants d'entrée ($I_{E1}$, $I_{E2}$) aux résistances d'entrée ($R_{E1}$, $R_{E2}$),

    f) en fonction de la comparaison de tension, un niveau de tension déterminé est délivré aux sorties ($OUT_1$, $OUT_2$) des étages de comparateur ($K_1$, $K_2$).

2. Circuit selon la revendication 1, caractérisé en ce que, dans la partie de courant de référence (1), un circuit à largeur de bande interdite (1a) est prévu, qui engendre la partie ($I_1$) indépendante de la tension du courant de référence ($I_{Ref}$) au moyen d'une résistance ($R_1$).

3. Circuit selon la revendication 1, caractérisé en ce que la partie de courant de référence (1) présente une deuxième partie de circuit (1b), qui contient une résistance ($R_2$) raccordée à la tension d'alimentation ($U_V$), et en ce que la partie ($I_2$) dépendante de la tension du courant de référence ($I_{Ref}$) est formée au moyen de cette résistance ($R_2$).

4. Circuit selon une des revendications 1 à 3, caractérisé en ce que, dans une autre partie de circuit (1c) de la partie de courant de référence (1), des transistors ($T_1$, $T_2$, $T_{3a}$, $T_{3b}$) de miroir de courant sont prévus, par l'intermédiaire desquels, les deux courants partiels ($I_1$, $I_2$) du courant de référence ($I_{Ref}$) sont additionnés.

5. Circuit selon une des revendications 1 à 4, caractérisé en ce que la partie de comparateur (2) présente des transistors ($T_4$, $T_5$, $T_6$, $T_7$, $T_8$), de miroir de courant, par l'intermédiaire desquels, le courant de référence ($I_{Ref}$) est amené aux branches de la partie de comparateur (2).

6. Circuit selon une des revendications 1 à 5, caractérisé en ce que la partie de comparateur (2) contient des transistors de comparaison ($T_{16}$, $T_{18}$), que, pour la comparaison de tension, les courants ($I_{E1}$, $I_{E2}$, $I_{Ref}$) correspondants aux tensions sont mis en comparaison les uns avec les autres par l'intermédiaire des transistors de comparaison ($T_{16}$, $T_{18}$), que la partie de comparateur (2) présente des transistors de sortie ($T_{17}$, $T_{19}$), qui sont commandés par les transistors de comparaison ($T_{16}$, $T_{18}$) en fonction de la comparaison de tension, et en ce que les niveaux de tension des sorties ($OUT_1$, $OUT_2$), de la partie de comparateur (2) des étages de comparateur ($K_1$, $K_2$), sont ajustés par les transistors de sortie ($T_{17}$, $T_{19}$).

7. Circuit selon une des revendications 1 à 6, caractérisé en ce que la résistance de référence ($R_{Ref}$) est plus grande que les résistances d'entrée ($R_{E1}$, $R_{E2}$).

8. Circuit selon une des revendications 1 à 7, caractérisé en ce que le seuil de réponse des étages de comparateur ($K_1$, $K_2$) est ajusté, ou bien modifié, par les grandeurs du courant de référence ($I_{Ref}$) et/ou par l'intermédiaire de la différence entre la résistance de référence (-($R_{Ref}$) et les résistances d'entrée ($R_{E1}$, $R_{E2}$).

9. Circuit selon la revendication 8, caractérisé en ce que le seuil de réponse des étages de comparateur ($K_1$, $K_2$) présente une allure de tension positive.

10. Circuit selon une des revendications 1 à 9, caractérisé en ce que les résistances ($R_1$, $R_2$), pour l'engendrement des deux portions ($I_1$, $I_2$) du courant de référence ($I_{Ref}$), et les résistances ($R_{E1}$, $R_{E2}$, $R_{Ref}$), pour la formation de la comparaison de tension, présentent la même allure de température.

11. Circuit selon une des revendications 1 à 10, caractérisé en ce que l'étage de comparateur ($K_1$, $K_2$) présente une partie de contrôle (3), qui termine la surveillance du consommateur, lorsque la tension ($U_{Ref}$), à l'entrée de référence (REF) de l'étage de comparateur ($K_1$, $K_2$), passe au-dessous d'une tension minimale ($U_{Refmin}$).

12. Circuit selon la revendication 11, caractérisé en ce que la partie de contrôle (3) présente un diviseur de tension ($R_3$, $R_4$) et des transistors de commutation ($T_{20}$, $T_{21}$), que la tension minimale ($U_{Refmin}$) est ajustée par l'intermédiaire du diviseur de tension ($R_3$, $R_4$), et en ce que, lors du passage au-dessous de la tension minimale ($U_{Refmin}$), les sorties ($OUT_1$, $OUT_2$) de la partie de comparateur (2) sont mises hors circuit par l'intermédiaire des transistors de commutation ($T_{20}$, $T_{21}$).

13. Circuit selon une des revendications 1 à 12, caractérisé en ce que, pour la protection contre des surtensions, des résistances série ($R_V$) et des diodes Zener ($Z_1$, $Z_2$, $Z_3$) sont raccordées aux entrées ($E_1$, $E_2$, REF) des étages de comparateur ($K_1$, $K_2$).

14. Circuit selon une des revendications 1 à 13, caractérisé en ce que des lampes de contrôle ($KL_1$, $KL_2$, $KL_3$) sont prévues, qui sont commandées en fonction des niveaux de tension aux sorties ($OUT_1$, $OUT_2$) des étages de comparateur ($K_1$, $K_2$).

15. Circuit selon une des revendications 1 à 14, caractérisé en ce que les étages de comparateur ($K_1$, $K_2$) sont intégrés dans un circuit intégré.

16. Circuit selon une des revendications 1 à 15, caractérisé en ce qu'à plusieurs parties de comparateur (2) de différents étages de comparateurs ($K_1$, $K_2$), d'une partie de courant de référence (1), le même courant de référence ($I_{Ref}$) est amené.

FIG.1

EP 0 503 477 B1

FIG.2

EP 0 503 477 B1